# FASCICULE DE BREVET EUROPEEN

(11) **EP 2 459 435 B1**
(45) Date de publication et mention de la délivrance du brevet: **06.01.2016**
(21) Numéro de dépôt: 10729871.3
(22) Date de dépôt: 06.07.2010
(51) Int. Cl.: B62D 53/06, B60C 19/00, B62D 61/12, B62D 63/06

(54) **VEHICULE COMPORTANT AU MOINS DEUX ESSIEUX ET PROCEDE DE REPARTITION DE LA CHARGE ENTRE LESDITS AU MOINS DEUX ESSIEUX**
FAHRZEUG MIT MINDESTENS ZWEI ACHSEN UND VERFAHREN ZUR VERTEILUNG DER LAST ZWISCHEN MINDESTENS DIESEN BEIDEN ACHSEN
VEHICLE COMPRISING AT LEAST TWO AXLES AND METHOD FOR DISTRIBUTING THE LOAD BETWEEN SAID AT LEAST TWO AXLES

(30) Priorité: 29.07.2009 FR 0955306
(43) Date de publication de la demande: 06.06.2012
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: ALBERT, Loïc, F-63100 CLERMONT-FERRAND (FR); MARLIER, Fabien, F-63000 CLERMONT-FERRAND (FR); MANSUY, Philippe, F-63118 CEBAZAT (FR)
(74) Mandataire: Le Cam, Stéphane Georges Elie
(86) Numéro de dépôt international: PCT/EP2010/059604
(87) Numéro de publication internationale: WO 2011/012407

(56) Documents cités:
- EP-A2- 2 075 143
- WO-A1-2006/054940
- WO-A1-2007/050014
- DE-A1-102004 062 343
- US-A- 5 035 439
- US-B1- 6 240 339

## Description

L'invention concerne un véhicule tel qu'un véhicule de transport de type poids lourd, comportant au moins deux essieux, aucun d'entre eux n'étant directionnel et un procédé de répartition de la charge dudit véhicule.

Bien que non limité à ce type d'application, l'invention sera plus particulièrement décrite en référence à un véhicule de type remorque ou semi remorque comportant trois essieux, chacun équipé d'au moins deux pneumatiques.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Un plan circonférentiel est un plan perpendiculaire à l'axe de rotation du pneumatique.

Le plan médian circonférentiel, ou plan équatorial, est un plan perpendiculaire à l'axe de rotation du pneu et qui divise le pneumatique en deux moitiés.

De tels véhicules, destinés généralement à porter de lourdes charges, doivent satisfaire à certaines obligations concernant notamment l'espacement longitudinal entre chacun des essieux. En effet, les différentes réglementations imposent des distances longitudinales entre deux essieux d'une remorque en comportant trois en fonction de la charge admissible par ledit véhicule. L'usage actuelle des remorques comportant trois essieux est habituellement une distance de 1.3 mètre. Par ailleurs, l'état actuel du marché de ces remorques va vers une standardisation de la conception de ces remorques et notamment d'un équipement en pneumatique donné et identique pour l'ensemble des essieux.

L'usage qui est fait de telles remorques comportant trois essieux a un effet notamment sur l'usure des pneumatiques. En effet, lorsque le véhicule suit un parcours en ligne droite, par exemple sur route ou autoroute, l'ensemble des pneumatiques équipant la remorque subit un traitement sensiblement équivalent. Par contre, dès lors que la remorque suit un parcours en courbe, tel que par exemple sur un rond point ou bien lors de manoeuvres, les pneumatiques ne sont plus sollicités de la même façon. Ces différences de sollicitations génèrent une usure très variable des différents pneumatiques équipant la remorque, ce qui rend notamment la gestion des pneumatiques compliquées. Cela nécessite en outre de prévoir des pneumatiques satisfaisant les conditions les plus sévères en usure et donc des pneumatiques comportant une épaisseur suffisante de la bande de roulement. Cela complexifie bien entendu la conception du pneumatique, la masse caoutchouteuse n'étant pas favorable aux performances d'endurance du pneumatique car entraînant des augmentations de la température du pneumatique en roulage.

Tout d'abord, notamment en fonction de la vitesse, le roulage en courbe entraîne des transferts de charge sur les pneumatiques se trouvant sur le côté extérieur de la courbe et donc une usure plus importante de ceux-ci.

D'autre part, les pneumatiques équipant les trois essieux subissent pour certains d'entre eux des phénomènes de ripage sur le sol qui accentue l'usure des pneumatiques concernés par ces phénomènes. Il est en effet connu que trois essieux équipés chacun d'au moins deux pneumatiques équipant le véhicule, l'ensemble des pneumatiques ne peut parvenir à suivre une trajectoire en courbe correspondant au parcours que suit le véhicule. Lorsque l'espacement entre les essieux est homogène, si les pneumatiques équipant l'essieu intermédiaire suivent une trajectoire sensiblement équivalente à celle du véhicule, les pneumatiques équipant les deux autres essieux subissent des phénomènes de ripage sur le sol conduisant à des usures plus importantes.

Il ressort de ces usages que les phénomènes d'usure des pneumatiques équipant un tel véhicule ne sont pas homogènes selon l'emplacement du pneumatique sur la remorque alors que les pneumatiques sont le plus souvent tous les mêmes.

En outre, les évolutions des réseaux routiers, notamment en vue d'améliorer la sécurité des usagers, a conduit à la multiplication des ronds points et donc à une augmentation non négligeable des causes conduisant à des usures différentes de l'ensemble des pneumatiques équipant une remorque.

L'état actuel de ces situations fait que l'usure non homogène des pneumatiques d'une remorque comportant trois essieux devient une gêne pour l'utilisateur qui doit immobiliser son véhicule trop fréquemment pour y remédier soit par permutation des pneumatiques soit par un changement.

Le document FR 2 903 953 ou bien encore le document EP 1 640 247 proposent des solutions consistant en des essieux auto vireurs par braquage passif ou bien actif des essieux d'une remorque. Ces technologies si elles apportent des solutions au problème du ripage ou bien d'une usure différente selon les pneumatiques sont par contre difficiles à mettre en oeuvre et onéreuses. En outre, ces technologies ne sont opérationnelles du fait de leurs complexités que lors de manoeuvres.

Il existe par ailleurs sur le marché de telles remorques dont un ou plusieurs essieux sont relevables pour éliminer le contact avec le sol des pneumatiques équipant ces essieux. Ces essieux relevables évitent bien entendu l'usure des pneumatiques concernées lorsqu'ils sont en position relevée mais cet état ne peut intervenir que lorsque la charge transportée est en dessous de la charge maximale possible.

Les inventeurs se sont ainsi donnés pour mission d'améliorer l'usure des pneumatiques d'un véhicule selon le préambule de la revendication let tel que décrit par le document EP2075143 A2 et plus spécifiquement de réduire l'inhomogénéité de vitesse d'usure entre les différents pneumatiques notamment lors des roulages en courbe ou lors de manoeuvres.

Ce but a été atteint selon l'invention par un véhicule selon la revendication 1.

Avantageusement selon l'invention, lesdits au moins deux essieux ne sont pas des essieux moteurs.

Selon un mode de réalisation préférée de l'invention, au moins un essieu porte une charge supérieure d'au moins 15% à celle portée par un autre essieu.

Les inventeurs ont su mettre en évidence, notamment dans le cas des remorques comportant trois essieux, qu'une répartition de la charge différente sur les essieux permet de contribuer à homogénéiser la vitesse d'usure des pneumatiques lors du franchissement de rond points ou bien lors de manoeuvres. Plus précisément, la vitesse d'usure des pneumatiques équipant les essieux avant et arrière est diminuée.

De plus en plus de véhicules et, notamment les remorques comportant trois essieux, sont aujourd'hui équipés de suspension du type à pot de suspension à air. Actuellement, les pots de suspension sont tous à la même pression. Une modification du dispositif de gestion de la pression des pots à air, à la portée de l'homme du métier, par exemple à l'aide d'électrovannes, peut permettre de conférer des pressions différentes d'un pot à l'autre et donc d'un essieu à l'autre. Une telle modification de la pression des pots de suspension à air permet d'atteindre une répartition de la charge différente entre au moins deux essieux.

Selon un premier mode de réalisation de l'invention, la gestion de la pression dans les différents pots de suspension à air peut être réalisée immédiatement après le chargement du véhicule et conservée pendant le roulage de celui-ci. Ce mode de réalisation est plus particulièrement adapté au cas des véhicules qui circulent avec des charges inférieures à leur capacité de charge maximum. En effet, la perte en termes de comportement des pneumatiques équipant les essieux dont la charge est allégée n'a pas de conséquence dans la mesure où le véhicule présente une charge inférieure à sa capacité de charge maximum. En effet, le comportement des pneumatiques requis pour la conduite du véhicule en termes notamment de rigidité de dérive peut être obtenu avec seulement les pneumatiques de deux essieux voire d'un seul essieu selon la charge transportée, les pneumatiques étant dimensionnés pour la charge maximum du véhicule.

Les inventeurs ont également mis en évidence, que dans la majorité des cas, les véhicules ne sont pas utilisés à leur charge maximum et qu'en conséquence, ce premier mode de réalisation est satisfaisant dans de nombreux cas.

Selon un deuxième mode de réalisation de l'invention, cette gestion de la pression dans les pots de suspension à air est faite en temps réel de façon à ne pas pénaliser les roulages en ligne droite et assurer des charges différentes entre au moins deux essieux uniquement dans des passages en courbe correspondant à des rond points ou bien des phases de manoeuvre.

Pour effectuer une telle gestion en temps réel, il est possible de prévoir une commande manuel pilotée par le conducteur qui va permettre de passer d'un état dans lequel les pressions sont identiques pour tous les pots de suspension, ledit état étant adapter au roulage sur route ou autoroute, à un autre état dans lequel les pressions sont différentes pour au moins deux pots de suspension à air.

Une autre méthode pour effectuer cette gestion en temps réel peut se faire à l'aide d'un microprocesseur à partir de données mesurées sur le véhicule. Il est par exemple possible d'utiliser des données accessibles par les systèmes de freinage avec antiblocage associés à chacune des roues. En effet, ces systèmes permettent de connaître précisément la vitesse de rotation de chacune des roues et donc d'en déduire d'une part la vitesse du véhicule par une moyenne des différentes vitesses et d'autre part le rayon de rotation suivi, s'il existe, par des différences entre les vitesses des roues d'un même essieu.

Il est encore possible d'obtenir des répartitions de charges différentes entre au moins deux essieux en prévoyant des pots de suspension à air de dimensions différentes sur au moins un essieu. Selon de telles réalisations, les répartitions de charges différentes sont conservées pendant le roulage.

Les essais réalisés sur un parcours combinant des trajets sur route, en milieu urbain et sur parking de façon à simuler une utilisation standard moyenne ont montré qu'un véhicule selon l'invention permet d'obtenir une vitesse d'usure plus homogène de l'ensemble des pneumatiques du véhicule comparée à la vitesse d'usure des pneumatiques équipant un véhicule semblable pour lequel la charge est répartie de manière équivalente sur l'ensemble des essieux.

Selon une première variante de réalisation de l'invention, ledit véhicule comportant trois essieux, au moins deux essieux portent des charges identiques. Avantageusement selon l'invention, la charge portée par l'essieu intermédiaire est différente de celle des autres essieux pour limiter au mieux les phénomènes de ripage des pneumatiques équipant les autres essieux.

Selon d'autres variantes de réalisation de l'invention, ledit véhicule comportant trois essieux, chaque essieu porte une charge différente. Selon ce type de variante de réalisation, le choix de répartition sera fait en fonction des différents paramètres du véhicule tels que la taille, l'espacement entre les essieux, la charge transportée,...

Selon l'invention, la charge portée par l'essieu intermédiaire est supérieure à celles des autres essieux. L'essieu intermédiaire porte une charge supérieure à celles des deux autres essieux de façon à limiter au mieux les phénomènes de ripage des pneumatiques équipant ces deux essieux avant et arrière soit lors de passage de rond points soit lors de manoeuvres.

Selon une réalisation préférée de l'invention, la charge portée par l'essieu intermédiaire est comprise entre 35 et 70% de la charge du véhicule.

De préférence également, la charge portée par l'essieu avant et/ou l'essieu arrière est comprise entre 10 et 33% de la charge du véhicule.

L'allégement de la charge portée par les pneumatiques de l'essieu avant permet en outre de limiter l'endommagement de ces pneumatiques lors de chocs par exemple sur des bordures de trottoirs. En effet, ce sont les pneumatiques de l'essieu avant qui viennent éventuellement au contact desdites bordures de trottoirs lors de manoeuvre et passages de ronds points.

Les inventeurs ont encore su mettre en évidence que le véhicule selon l'invention peut être mis en oeuvre sans aucune modification des pneumatiques habituellement utilisées.

En effet, actuellement, les pneumatiques majoritairement utilisés sur des remorques comportant trois essieux sont du type 385/65R22.5. De tels pneumatiques présentent une capacité de charge de 4.5 tonnes, selon les définitions de l'ETRTO. Par ailleurs, certaines législations sur les remorques ont par exemple fixé une charge maximale de ces remorques à 24 tonnes. Il ressort de ces chiffres que même lorsque la remorque est à sa charge maximale, les six pneumatiques équipant les trois essieux sont en surcapacité au regard de la charge transportée. En effet, en théorie, ces six pneumatiques pourraient porter une charge de 27 tonnes.

Il est donc possible, dans de tels cas, d'appliquer l'invention à une telle remorque équipée de ces pneumatiques en faisant par exemple porter une charge de 4.5 tonnes à chacun des pneumatiques de l'essieu intermédiaire et une charge de 3.75 tonnes à chacun des autres pneumatiques.

L'invention s'appliquera d'autant mieux aux cas des véhicules circulant avec des charges inférieures aux charges maximales possibles.

Il est bien entendu encore possible selon d'autres variantes de réalisation de l'invention, d'associer le véhicule à des pneumatiques, différents de ceux habituellement utilisés, pouvant par exemple porter une charge plus importante pour autoriser l'essieu intermédiaire à porter une charge plus importante qu'il n'est possible de le faire avec les pneumatiques décrits ci-dessus.

L'invention prévoit encore que les différents essieux puissent être équipés de pneumatiques différents, présentant notamment des capacités de charges différentes, pour assurer des capacités de charges différentes entre au moins deux essieux.

Lorsque l'invention est appliquée à des véhicules dont chacun des essieux est équipés de dispositifs de freinage avec système antiblocage sur chacun des essieux, le freinage peut être assurer efficacement.

Il existe encore des véhicules comportant un seul système antiblocage pilotant l'ensemble des dispositifs de freinage des différents essieux. Pour ce type de véhicule, il est nécessaire de prévoir un asservissement des actions liées au système antiblocage en fonction de la charge portée par chacun des essieux. Il est par exemple à la portée de l'homme du métier de lier ces actions à la pression des pots de suspension à air.

L'invention propose encore un procédé de répartition de la charge d'un véhicule entre plusieurs essieux dudit véhicule, les axes de rotation desdits essieux étant en permanence parallèles entre eux d'un essieu à l'autre, selon la revendication 7.

Par usage du véhicule au sens de l'invention, on entend soit la charge transportée, soit la nature du roulage effectué (roulage sur route, manoeuvres ou roulage en zone urbaine), soit encore une combinaison de ces deux caractéristiques. En d'autres termes, la répartition de charge prévue par l'invention est fonction de la charge transportée et/ou du type de roulage effectué.

Selon un mode de réalisation préféré de l'invention, le véhicule étant équipé sur chacun des essieux de suspension du type à pot de suspension à air, la pression d'air des pots de chacun des essieux est adaptée en fonction de l'usage du véhicule.

Comme expliqué précédemment, dès que le véhicule suit un tracé en courbe tel que celui d'un rond point ou lors de manoeuvres, la pression d'air des pots de chacun des essieux est modifiée pour répartir de façon différente la charge entre les essieux.

De préférence encore selon l'invention, on applique une pression d'air dans le pot de suspension à air d'un essieu supérieure d'au moins 15% à celle dans le pot de suspension à air d'un autre essieu.

Selon une première variante de réalisation de l'invention, le véhicule comportant trois essieux, deux essieux présentent en permanence une pression d'air des pots identiques.

Selon une deuxième variante de réalisation de l'invention, ledit véhicule comportant trois essieux, chaque essieu présente, au moins pendant un usage donné, une pression d'air des pots différente.

Selon l'invention, la pression d'air du pot de suspension à air de l'essieu intermédiaire est supérieure à celle des autres essieux.

D'autres détails et caractéristiques avantageux de l'invention ressortiront ci-après de la description d'un exemple de réalisation de l'invention en référence aux figures qui représentent :

- figure 1, un schéma d'un véhicule comportant une remorque avec trois essieux,

- figure 2, une représentation schématique d'une loi de pilotage de la charge par essieu d'un véhicule en fonction de la charge transportée par ledit véhicule.

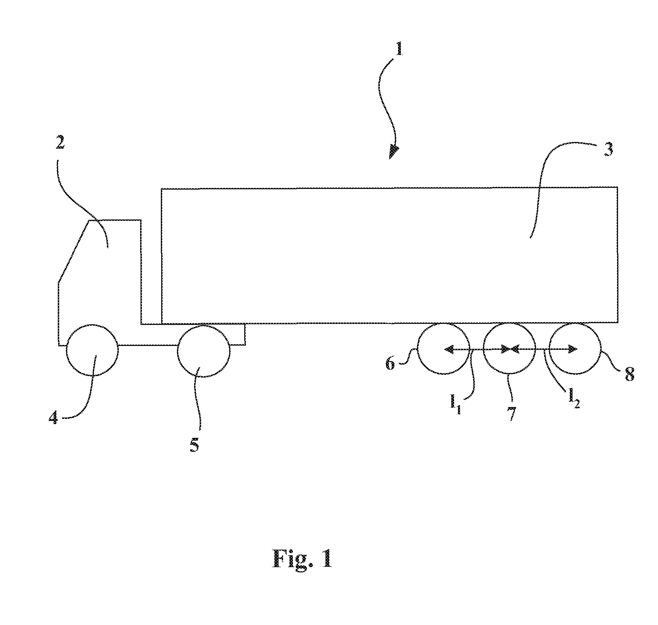

La figure 1 n'est pas représentée à l'échelle pour en simplifier la compréhension.

Sur la figure 1, est représenté de manière schématique un véhicule 1 constitué d'une part d'un tracteur 2 et d'une remorque 3.

Le tracteur 2 comporte un premier essieu 4 directeur et un deuxième essieu moteur 5. La remorque 3 comporte trois essieux porteur 6, 7, 8. Ces trois essieux 6, 7, 8 ne sont ni directionnels ni moteurs. Les espacements ou empattements 11 et 12 entre les trois essieux 6, 7, 8 sont égaux à 1,3 mètre.

La masse globale du véhicule 1 en charge est égale au maximum à 40 tonnes, ce qui correspond à une charge transportée maximum de 24 tonnes.

Les pneumatiques équipant le tracteur 2 sont du type 315/70R22.5 et ceux équipant les essieux 6, 7, 8 de la remorque 3 sont du type 385/65R22.5.

La répartition des masses sur les différents essieux lorsque le véhicule 1 est à sa charge maximale, celle-ci étant répartie de manière homogène dans la remorque 3 se répartit comme suit :
- essieu 4 : 6,6 tonnes
- essieu 5 : 11,8 tonnes
- essieux 6, 7 et 8 : 21,6 tonnes.

Chacun des essieux 6, 7, 8 est associé à une suspension, non représentée sur la figure, du type à pot de suspension à air dont la pression peut être ajustée pour chacun des essieux.

Selon l'invention, le véhicule 1 est équipé d'un système permettant de modifier la pression de chacun des pots de suspension à air en fonction de la charge transportée et éventuellement selon les cas du parcours suivi par le véhicule. Cette régulation des pressions est, par exemple, réalisée à l'aide d'électrovannes associées à chacun des circuits d'air des différents essieux 6, 7, 8.

Conformément à l'invention, lorsque la charge transportée n'est pas à son maximum et/ou aux abords des ronds points ou bien lors de manoeuvres, la charge portée par les essieux 6, 7 et 8 varient entre au moins deux desdits essieux.

La charge est de préférence plus importante sur l'essieu 7 de façon à permettre de limiter l'usure des pneumatiques des essieux 6 et 8 lorsqu'ils sont amenés à riper sur le sol lorsque le véhicule 1 tourne autour de ronds points ou lors de manoeuvres.

Des essais ont ainsi été réalisés avec le véhicule 1, celui-ci transportant une charge de 24 tonnes, portée comme expliquée précédemment pour 21.6 tonnes sur les trois essieux de la remorque, d'une part, avec des pressions identiques dans chacun des pots à air de suspension, comme les véhicules usuels, la charge portée par chacun des essieux étant égale à 7.2 tonnes. Et, d'autre part, les mêmes essais ont été réalisés avec un véhicule 1 dont les pressions d'air dans chacun des pots à air de suspension sont régulées conformément à l'invention de sorte que l'essieu 7 porte une charge de 9 tonnes et les essieux 6 et 8 portant chacun une charge égale à 6.3 tonnes. Dans les deux cas, les pneumatiques équipant les trois essieux de la remorque sont identiques.

Des premiers essais, permettant de simuler l'usure due à des roulages en zone urbaine comportant des rond points, ont été réalisés sur une piste imposant des rayons de rotation allant de 30 à 240 mètres, avec un écart-type de courbure de 0.0087 m⁻¹, avec des vitesses allant de 20 à 50 km/h, telles que l'écart-type d'accélération transversale soit de 0.47 m/s².

L'essai consiste à faire rouler le véhicule pendant une durée de 250 heures et de caractériser l'usure absolue par une mesure en grammes de matière du pneumatique perdue pour 100 Km de chacun des pneumatiques équipant les trois essieux de la remorque et une moyenne de ces usures étant établie entre les deux pneumatiques équipant un même essieu.

Les résultats sont inscrits dans le tableau ci-dessous :

| | Essieu 1 | Essieu 2 | Essieu 3 |
|---|---|---|---|
| Véhicule de référence (g/100Km) | 12.4 | 2.95 | 43.7 |
| Véhicule selon l'invention (g/100Km) | 10.4 | 3.77 | 40.2 |

Des seconds essais, permettant de simuler l'usure due à des roulages comportant en outre des manoeuvres, ont été réalisés sur une piste imposant des rayons de rotation allant de 16 à 240 mètres, avec un écart-type de courbure de 0.0097 m⁻¹, avec des vitesses allant de 5 à 50 km/h, telles que l'écart-type d'accélération transversale soit de 0.47 m/s².

L'essai consiste à faire rouler le véhicule pendant une durée de 250 heures et de caractériser l'usure absolue par une mesure en gramme de matière du pneumatique perdu pour 100 Km de chacun des pneumatiques équipant les trois essieux de la remorque et une moyenne de ces usures étant établie entre les deux pneumatiques équipant un même essieu.

Les résultats sont inscrits dans le tableau ci-dessous :

| | Essieu 1 | Essieu 2 | Essieu 3 |
|---|---|---|---|
| Véhicule de référence (g/100Km | 20.9 | 2.97 | 49.2 |
| Véhicule selon l'invention (g/100Km) | 17.6 | 3.75 | 45.24 |

Dans les deux cas, les résultats obtenus montrent que le véhicule selon l'invention permet de diminuer l'usure des pneumatiques équipant les essieux avant et arrière de la remorque. Le deuxième essai met en outre en évidence que l'usure due au ripage lors des manoeuvres est également améliorée.

Un troisième type d'essais a été réalisé en faisant rouler deux véhicules identiques et l'un d'eux étant conforme au véhicule 1 selon l'invention sur des parcours identiques et représentatifs d'un type d'usage classique pour des camions transportant des marchandises. L'essai a consisté à déterminer la durée de vie des pneumatiques sur chacun des essieux, celle-ci étant exprimée en kilomètres parcourus avant usure totale (indiquée par les indicateurs d'usure).

Les résultats sont inscrits dans le tableau ci-dessous :

| | Essieu 1 | Essieu 2 | Essieu 3 |
|---|---|---|---|
| Véhicule de référence | 267 000 Km | 455 000 Km | 92 000 Km |
| Véhicule selon l'invention | 308 000 Km | 362 000 Km | 103 000 Km |

S'il apparaît que des gains sont obtenus uniquement sur les deux essieux 1 et 3 qui sont soumis au phénomène de ripage, la moins bonne performance des pneumatiques équipant l'essieu 2 est de moindre importance au vu des kilométrages parcourus par ces pneumatiques. En outre, l'usage conduit à effectuer des permutations des pneumatiques de cet essieu pour les mettre sur les autres essieux afin d'homogénéiser les usures.

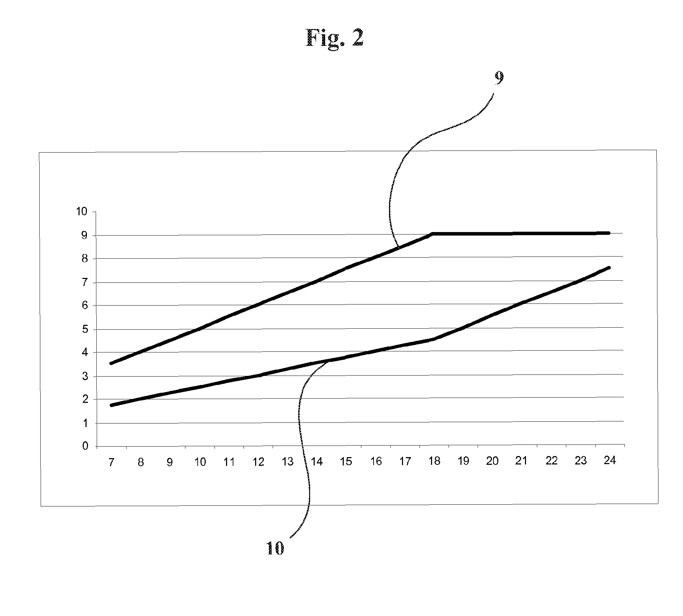

La figure 2 illustre un graphe présentant un exemple de loi de pilotage de la charge portée par chacun des essieux en fonction de la charge globale transportée et portée par les trois essieux 6, 7 et 8 de la remorque 3 du véhicule 1.

Selon cet exemple, la courbe 9 représente la charge portée par l'essieu 7, la charge maximum que celui-ci peut porter étant de 9 tonnes.

La courbe 10 représente la charge portée par chacun des essieux 6 et 8.

Conformément à l'invention, connaissant la charge globale transportée par le véhicule et portée par les trois essieux de la remorque 3, ces courbes permettent de définir la charge que doit porter chacun des essieux 6, 7 et 8 pour limiter au mieux les phénomènes d'usure liés au ripage des pneumatiques des essieux 6 et 8 lors de roulage autour de rond points ou bien lors de manoeuvres. La répartition des charges peut être obtenue selon l'invention en modifiant les pressions dans chacun des pots à air des suspensions de chaque essieu, par exemple à l'aide de systèmes de type électrovanne. Les pressions correspondant aux différentes charges que l'on souhaite voir portées par les différents essieux sont déterminées au préalable.

Comme expliqué précédemment, cet état de charges différentes portées par les trois essieux 6, 7 et 8 peut être appliqué en permanence lorsque le véhicule 1 transporte une charge relativement faible par rapport à la charge maximum qu'il pourrait transportée.

Il n'est par contre appliquée que momentanément, lors de trajets urbains ou bien lors de manoeuvres lorsque le véhicule 1 transporte une charge plus importante notamment proche ou égale à la charge maximum qu'il peut transporter. Pour que cet état ne s'applique que momentanément, le conducteur du véhicule peut disposer d'une commande manuel permettant de basculer d'un mode de fonctionnement ou les charges portées par les essieux 6, 7 et 8 sont identiques à un état de charge différenciées entre les différents essieux selon la loi de pilotage telle que décrite. Il est encore possible d'envisager un basculement d'un état à l'autre de manière automatisée, le type de roulage pouvant être analysée notamment à partir de la vitesse de chacune des six roues des trois essieux 6, 7 et 8.

Cette figure 2 n'illustre bien entendu qu'un exemple de loi de pilotage des charges par essieux ; il est possible d'envisager des lois différentes notamment en fonction du ou des types de pneumatiques équipant les trois essieux 6, 7 et 8. Il est encore possible de prévoir des charges différentes entre chacun des essieux 6, 7 et 8.

L'invention a essentiellement été décrite en référence à des remorques comportant trois essieux faisant partie de véhicules à cinq essieux. Le même principe, dans le cadre de l'invention défini par les revendications et en dehors, permet également de réduire l'usure de pneumatiques de remorques à deux essieux, faisant partie de véhicules à trois ou cinq essieux ou bien encore de remorques à deux ou trois essieux associés à des véhicules jusqu'à huit essieux pour des poids allant jusqu'à 60 tonnes.

L'invention s'applique encore à des véhicules combinant sur les mêmes essieux une répartition de la charge par essieu selon l'invention avec des essieux pouvant éventuellement être relevés lorsque la charge transportée est nulle.

## Revendications

1. Véhicule de type remorque ou semi remorque comportant trois essieux non directionnels associés à une gestion active des suspensions du type à pot de suspension à air équipés d'au moins deux pneumatiques dont les axes de rotation sont en permanence parallèles entre eux d'un des dits essieux à l'autre, tel que chacun des dits essieux porte au moins 10% de la charge du véhicule, en ce qu'au moins deux des dits essieux portent des charges différentes en roulage et **caractérisé en ce que** la charge portée par l'essieu intermédiaire est supérieure à celle des autres dits essieux.

2. Véhicule selon la revendication 1, **caractérisé en ce que** au moins l'essieu intermédiaire porte une charge supérieure d'au moins 15% à celle portée par un autre des dits essieux.

3. Véhicule selon la revendication 1 ou 2, **caractérisé en ce qu'**au moins deux des dits essieux portent des charges identiques.

4. Véhicule selon la revendication 1 ou 2, **caractérisé en ce que** chacun des dits essieux porte une charge différente.

5. Véhicule selon l'une des revendications 1 à 4, **caractérisé en ce que** la charge portée par l'essieu intermédiaire est comprise entre 35 et 70% de la somme de la charge portée par les trois essieux.

6. Véhicule selon l'une des revendications 1 à 5, **caractérisé en ce que** la charge portée par l'essieu avant et/ou l'essieu arrière est comprise entre 10 et 33% de la somme de la charge portée par les trois essieux.

7. Procédé de gestion active des suspensions pour la répartition de la charge d'un véhicule de type remorque ou semi remorque entre plusieurs essieux dudit véhicule, les axes de rotation desdits essieux étant en permanence parallèles entre eux d'un essieu à l'autre, le véhicule comportant trois essieux non directionnels et étant équipé sur chacun des dits essieux de suspension du type à pot de suspension à air, tel qu'on effectue une répartition de la charge du véhicule entre les dits trois essieux en fonction de l'usage dudit véhicule, que chaque essieu porte au moins 10% de la charge du véhicule et **caractérisé en ce que** la pression d'air du pot de suspension à air de l'essieu intermédiaire est supérieure à celle des dits autres essieux en roulage.

8. Procédé selon la revendication 7, **caractérisé en ce que** la pression d'air des pots de chacun des dits essieux est adaptée en fonction de l'usage du véhicule.

9. Procédé selon la revendication 8, **caractérisé en ce qu'**on applique une pression d'air dans le pot de suspension à air de l'essieu intermédiaire supérieure d'au moins 15% à celle dans le pot de suspension à air d'un autre essieu.

10. Procédé selon la revendication 7 à 9, **caractérisé en ce qu'**au moins deux des dits essieux présentent en permanence une pression d'air des pots identiques.

11. Procédé selon la revendication 7 à 9, **caractérisé en ce que** chacun des dits essieux présente, au moins pendant un usage donné, une pression d'air des pots différente.

## Patentansprüche

1. Fahrzeug der Anhänger- oder Aufliegerart,
umfassend drei nicht gelenkte Achsen, die mit einer aktiven Steuerung der Aufhängungen der Luftfedertopfart verbunden sind und mit mindestens zwei Luftreifen versehen sind, deren Drehachsen dauerhaft von einer Achse zur anderen zueinander parallel sind, so dass jede der Achsen mindestens 10% der Last des Fahrzeugs trägt, wobei mindestens zwei der Achsen verschiedene Lasten beim Fahren tragen, und **dadurch gekennzeichnet, dass** die von der Zwischenachse getragene Last größer ist als die der anderen der Achsen.

2. Fahrzeug nach Anspruch 1, **dadurch gekennzeichnet, dass** mindestens die Zwischenachse eine Last von über mindestens 15% der von einer anderen der Achsen getragenen trägt.

3. Fahrzeug nach Anspruch 1 oder 2, **dadurch gekennzeichnet, dass** mindestens zwei der Achsen identische Lasten tragen.

4. Fahrzeug nach Anspruch 1 oder 2, **dadurch gekennzeichnet, dass** jede der Achsen eine unterschiedliche Last trägt.

5. Fahrzeug nach einem der Ansprüche 1 bis 4, **dadurch gekennzeichnet, dass** die von der Zwischenachse getragene Last zwischen 35 und 70% der Summe der von den drei Achsen getragenen Last beträgt.

6. Fahrzeug nach einem der Ansprüche 1 bis 5, **dadurch gekennzeichnet, dass** die von der Vorderachse und/oder Hinterachse getragene Last zwischen 10 und 33% der Summe der von den drei Achsen getragenen Last beträgt.

7. Verfahren zur aktiven Steuerung der Aufhängungen zur Verteilung der Last eines Fahrzeugs der Anhänger- oder Aufliegerart zwischen mehreren Achsen des Fahrzeugs, wobei die Drehachsen der Achsen von einer Achse zur anderen dauerhaft parallel sind, wobei das Fahrzeug drei nicht gelenkte Achsen aufweist und auf jeder der Achsen mit einer Aufhängung der Luftfedertopfaufhängungsart versehen ist, so dass eine Verteilung der Last des Fahrzeugs zwischen den drei Achsen in Abhängigkeit von der Verwendung des Fahrzeugs bewirkt wird, und dass jede Achse mindestens 10% der Last des Fahrzeugs trägt, und **dadurch gekennzeichnet, dass** der Luftdruck des Luftfedertopfs der Zwischenachse beim Fahren größer ist als der der anderen Achsen.

8. Verfahren nach Anspruch 7, **dadurch gekennzeichnet, dass** der Luftdruck der Töpfe jeder der Achsen in Abhängigkeit von der Verwendung des Fahrzeugs angepasst wird.

9. Verfahren nach Anspruch 8, **dadurch gekennzeichnet, dass** in den Luftfedertopf der Zwischenachse ein Luftdruck von über mindestens 15% dessen im Luftfedertopf einer anderen Achse angelegt wird.

10. Verfahren nach Anspruch 7 bis 9, **dadurch gekennzeichnet, dass** mindestens zwei der Achsen dauerhaft einen identischen Luftdruck der Töpfe aufweisen.

11. Verfahren nach Anspruch 7 bis 9, **dadurch gekennzeichnet, dass** jede der Achsen zumindest während einer gegebenen Verwendung einen anderen Topfluftdruck aufweist.

## Claims

1. Vehicle of the trailer or semi-trailer type comprising three non-steering axles associated with the active management of suspensions of the air spring type, fitted with at least two tyres the axis of rotation of which are always mutually parallel from one axle to another, wherein each axle bears at least 10% of the load of the vehicle and wherein at least two of said axles bear different loads during running and **characterized in that** the load borne by the intermediate axle is higher than that of the other axles.

2. Vehicle according to Claim 1, **characterized in that** at least the intermediate axle bears a load at least 15% greater than the load borne by another axle.

3. Vehicle according to Claim 1 or 2, **characterized in that** at least two of said axles bear identical loads.

4. Vehicle according to Claim 1 or 2, **characterized in that** each axle bears a different load.

5. Vehicle according to Claim 1 to 4, **characterized in that** the load borne by the intermediate axle is comprised between 35 and 70% of the sum of the load borne by the three axles.

6. Vehicle according to Claim 1 to 5, **characterized in that** the load borne by the front axle and/or the rear axle is comprised between 10 and 33% of the sum of the load borne by the three axles.

7. Method of active management of suspensions for distributing the load of a vehicle of the trailer or semi-trailer type between several axles of said vehicle, the axis of rotation of said axles being permanently parallel to one another from one axle to another, the vehicle comprising three non-steering axles and being equipped on each of said axles of suspensions of the air spring type wherein the vehicle load is distributed between the various axles according to the use being made of said vehicle, wherein each axle bears at least 10% of the load of the vehicle and **characterized in that** the air pressure of the air spring suspension of the intermediate axle is higher than that of the other said axles during rolling.

8. Method according to Claim 7, **characterized in that** the air pressure in the air springs of each of the axles is adapted to suit the use being made of the vehicle.

9. Method according to Claim 8, **characterized in that** the air pressure applied to the suspension air spring of the intermediate axle is at least 15% higher than that in the suspension air spring of another axle.

10. Method according to Claim 7 to 9, **characterized in that** at least two of said axles always have the same air spring air pressure.

11. Method according to Claim 7 to 9, **characterized in that** each of said axles, at least during a given use, has a different air spring air pressure.
